# EUROPEAN PATENT APPLICATION

(11) **EP 2 384 050 A1**
(43) Date of publication of application: **02.11.2011**
(21) Application number: 10305461.5
(22) Date of filing: 30.04.2010
(51) Int. Cl.: H04W 36/00

(54) **Transmission of the format of a cell identifier in a handover**

(71) Applicant: Alcatel Lucent, 75008 Paris (FR)
(72) Inventor: Godin, Philippe, 78220, Viroflay (FR)
(74) Representative: ALU Antw Patent Attorneys

(57) **Abstract**

The present invention relates to a method for transferring an ongoing communication session from a source cell (A) to a target cell (B).
In accordance with an embodiment of the invention, the method comprises the steps of:
- by a source radio access node (HeNBA), sending a first handover message (HANDOVER REQUIRED) for an outbound handover (H1) from the source cell towards the target cell, and comprising mobility history information (UE HISTORY) of the UE during the communication session, and further comprising a node identifier (eNBIdA) of the source radio access node as part of the mobility history information,
- by a target radio access node (eNBB), sending a second handover message (HANDOVER REQUEST ACK) for acknowledging the outbound handover,

wherein the method further comprises the steps of:
- by the source radio access node, further encoding a format indicator as part of the mobility history information whereby the target radio access node learns whether the node identifier is encoded according to a first or second format applicable to macro or home radio access nodes respectively,
- by the target radio access node, decoding accordingly the node identifier from the mobility history information.

The present invention also relates to a corresponding source radio access node, and to a corresponding target radio access node.

## Description

### Technical Field of the Invention

The present invention relates to cellular Public Land Mobile Network (PLMN), and more specifically to handover (or handoff), whereby an ongoing communication session is transferred from one cell to another.

### Technical Background of the Invention

Handover is the process of transferring an ongoing communication session, being a voice/video call or a data session, from the current serving cell, further referred to as the source cell, towards a new better-suited cell, further referred to as the target cell. For instance, as a User Equipment (UE) is moving away from the coverage area of a serving cell, the radio signal from that serving cell weakens while the radio signal from another better-suited cell strengthens. When the radio path loss between these two cells is past a predetermined threshold, a handover towards the better-suited cell is triggered. A UE may also be handed over on account of Radio Resource Management (RRM) issues, for instance because the serving cell gets overloaded.

For Long Term Evolution (LTE) mobile networks, an overview of the handover procedure and related message exchanges is described in § 10.1.2 of the technical specification entitled *"*Evolved Universal Terrestrial Radio Access (E-UTRA) and Evolved Universal Terrestrial Radio Access Network (E-UTRAN); Overall description", published by the 3rd Generation Partnership Project (3GPP) in June 2009, ref. 3GPP TS 36.300 V9.0.0.

In a first step, the source evolved-NodeB (eNB) configures the UE measurements, e.g. the UE is configured to send MEASUREMENT REPORT on a regular basis, and/or as soon as a handover event is detected. The measurement reporting period and/or the handover parameters for detecting the handover events are broadcast by the serving cell as part of the system cell information.

In a second step, the source eNB makes a decision to hand off the UE based on the MEASUREMENT REPORT message(s) received from the UE and/or on Radio Resource Management (RRM) information. The source eNB either issues a HANDOVER REQUEST message directly to the target eNB, or a HANDOVER REQUIRED message to the Mobile Management Entity (MME) which is relayed towards the target eNB as a HANDOVER REQUEST message, passing necessary information to prepare the handover at the target side.

In a third step, the target eNB configures the required radio resources, and optionally reserves a Random Access CHannel (RACH) preamble. The target eNB acknowledges the handover request by either sending back a HANDOVER REQUEST ACKNOWLEDGE message directly to the source eNB, or a HANDOVER REQUEST ACKNOWLEDGE message to the MME which is relayed towards the source eNB as a HANDOVER COMMAND message. The HANDOVER REQUEST ACKNOWLEDGE or the HANDOVER COMMAND message includes a transparent RRC container to be sent by the source eNB to the UE as an RRC message to perform the handover, namely an RRC CONNECTION RECONFIGURATION message.

In a fourth step, the UE receives the RRC CONNECTION RECONFIGURATION message with necessary parameters, and is commanded by the source eNB to perform the handover. The UE performs synchronization to the target eNB and accesses the target cell via RACH, following a contention-free procedure if a dedicated RACH preamble was reserved, or following a contention-based procedure if no dedicated preamble was indicated.

In a fifth step, the target eNB responds with uplink allocation and timing advance value. When the UE has successfully accessed the target cell, the UE sends the RRC CONNECTION RECONFIGURATION COMPLETE message to the target eNB. The target eNB can now begin sending data to the UE.

In a sixth and last step, and after the data path is switched at the Serving Gateway (SG) to the target side, the target eNB informs the source eNB about the success of the handover procedure by sending a UE CONTEXT RELEASE message, which triggers the release of resources by the source eNB.

Home eNBs (HeNB) have been designed for use in a home or small business to operate home cells (also known as femto cells) and typically provide indoor coverage especially where access would otherwise be limited or unavailable. It connects to the service provider's network via broadband (e.g., DSL or cable), possibly via a HeNB gateway; current designs typically support 2 to 4 active mobile phones in a residential setting, and 8 to 16 active mobile phones in enterprise settings. The HeNB incorporates the functionality of a typical eNB but extends it to allow a simpler, self contained deployment.

Mobility from home cells towards macro cells is addressed by release 8 of 3GPP; mobility from macro cells towards home cells is addressed by release 9 of 3GPP. The source eNB must however figure out whether the target cell is operated by a macro eNB or a HeNB so as to build the necessary HANDOVER REQUEST/REQUIRED message and trigger the handover. Indeed, when the UE reports the Physical Cell Identifier (PCI) or E-UTRAN Cell Global Identifier (E-CGI) of a candidate target cell to the serving eNB, it does not report the type of eNB (i.e, macro eNB or HeNB) to which that cell belongs, thereby preventing the source eNB from properly identifying the target eNB.

The best existing solution to this problem relies on proprietary mechanisms. For example, the range of PCIs can be partitioned so that, when the UE reports a target PCI to the source eNB, the source eNB can determine if that target PCI corresponds to a macro eNB or a HeNB. This involves further configuration efforts, especially when HeNBs are largely deployed, which will substantially increase the Operational Expenditures (OPEX). Also, this is not always manageable because PCI range splitting is typically done to represent the access mode of the target cell (i.e., closed, hybrid or open) rather than to represent the type of eNB to which the target cell belongs (i.e., macro eNB or HeNB). Therefore, such a solution puts an adamant coupling between the eNB type and the access mode of its cell(s).

### Summary of the Invention

It is an object of the present invention to improve the handover procedure and to ease network configuration for handoffs towards home cells.

In accordance with a first aspect of the invention, a method for transferring an ongoing communication session for a user equipment from a source cell to a target cell comprises the steps of:
- by a source radio access node operating said source cell, sending a first handover message whereby an outbound handover from said source cell towards said target cell is requested for said user equipment, and comprising mobility history information of said user equipment during said communication session, and further comprising a node identifier of said source radio access node as part of said mobility history information,
- by a target radio access node operating said target cell, sending a second handover message whereby request for said outbound handover is acknowledged,
wherein said method further comprises the steps of:
- by said source radio access node, further encoding a format indicator as part of said mobility history information whereby said target radio access node learns whether said node identifier is encoded according to a first format applicable to macro radio access nodes or according to a second format applicable to home radio access nodes,
- by said target radio access node, decoding accordingly said node identifier from said mobility history information, thereby allowing said target radio access node to further initiate inbound handovers from said target cell to said source cell.

In accordance with another aspect of the invention, a radio access node configured to operate a source cell and involved in the transfer of an ongoing communication session for a user equipment from said source cell towards a target cell is further configured to send a first handover message whereby an outbound handover from said source cell towards said target cell is requested for said user equipment, and comprising mobility history information of said user equipment during said communication session, and further comprising a node identifier of said radio access node as part of said mobility history information,
wherein said radio access node is further configured to encode a format indicator as part of said mobility history information whereby a target radio access node operating said target cell learns whether said node identifier is encoded according to a first format applicable to macro radio access nodes or according to a second format applicable to home radio access nodes, thereby allowing said target radio access node to decode accordingly said node identifier from said mobility history information, and to further initiate inbound handovers from said target cell to said source cell.

In accordance with still another aspect of the invention, a radio access node configured to operate a target cell and involved in the transfer of an ongoing communication session for a user equipment from a source cell towards said target cell is further configured to receive a first handover message whereby an inbound handover from said source cell towards said target cell is requested for said user equipment, and comprising mobility history information of said user equipment during said communication session, and further comprising a node identifier of a source radio access node operating said source cell as part of said mobility history information,
wherein said radio access node is further configured:
- to decode a format indicator as part of said mobility history information whereby said radio access node learns whether said node identifier is encoded according to a first format applicable to macro radio access nodes or according to a second format applicable to home radio access nodes,
- to decode accordingly said node identifier from said mobility history information,
thereby allowing said radio access node to further initiate outbound handovers from said target cell to said source cell.

The eNB identity, which forms part of the E-CGI, is either 20 bits or 28 bits long, depending on whether the eNB is a macro eNB or a HeNB. This eNB identity is required so as to send the HANDOVER REQUEST/REQUIRED message towards the right destination.

The proposed solution relies on incoming handovers to learn about neighbor eNBs type. A new format indicator is added to the UE History Information IE contained in the HANDOVER REQUEST/REQUIRED message so as to help discriminate between a macro cell operated by a macro eNB and a home cell operated by a HeNB. Whenever a target eNB receives incoming handovers from a source eNB, it will learn the type of eNB to which the source cell pertains from the UE History Information IE.

Also, because the UE History Information IE may include information about multiple cells previously visited, the target eNB may additionally learn about the eNB type of multiple surrounding cells.

The invention allows automatic configuration of the eNB type so as to properly decode the eNB identifier, without the constraints associated with the prior art solutions. Inbound handovers towards home cells are made possible, which is essential in order to keep calls on-going when entering a mall, an enterprise or home.

In one embodiment of a method according to the invention, and in a corresponding embodiment of a source radio access node according to the invention, and in a corresponding embodiment of a target radio access node according to the invention, said format indicator is encoded/decoded as part of said node identifier encoding/decoding.

The eNB identifier of a previously visited cell can be explicitly encoded into the UE History Information IE, thereby allowing the proper retrieval of the eNB identifier of the visited cell eNB by the target eNB.

In one embodiment of a method according to the invention, and in a corresponding embodiment of a source radio access node according to the invention, and in a corresponding embodiment of a target radio access node according to the invention, said format indicator is a Boolean flag.

The E-CGI of a previously visited cell can be encoded together with a Boolean indicating whether the eNB operating that cell is a HeNB or not, or alternatively whether the eNB operating that cell is a macro eNB or not.

In one embodiment of a method according to the invention, and in a corresponding embodiment of a source radio access node according to the invention, and in a corresponding embodiment of a target radio access node according to the invention, said Boolean flag forms part of said node identifier.

A bit of the eNB identifier, for instance the first bit, may be used to indicate the eNB type, the remaining last bits being used for encoding the actual eNB identity, which would be at the expense of the allowable range of eNB identifiers.

In one embodiment of a method according to the invention, and in a corresponding embodiment of a source radio access node according to the invention, and in a corresponding embodiment of a target radio access node according to the invention, said format indicator is a cell coverage type.

As up today, the cell type only refers to the size of the coverage area of the cell, and not to the type of eNB to which that cell belongs.

A new cell type value, such as 'femtocell', or an existing cell type value, such as 'verysmall', could exclusively be dedicated to cells operated by HeNBs only. From this dedicated cell type value, one can derive whether the eNB identifier included in the E-CGI is encoded over 20 or 28 bits, and one can thus correctly retrieve the eNB identifier value.

### Brief Description of the Drawings

The above and other objects and features of the invention will become more apparent and the invention itself will be best understood by referring to the following description of an embodiment taken in conjunction with the accompanying drawings wherein:
- fig. 1 represents an LTE PLMN,
- fig. 2 represents a coverage area of two cells, one of which is a home cell,
- fig. 3 represents a message flow chart for an outbound handover from a home cell towards a macro cell, and
- fig. 4 represents a message flow chart for an inbound handover from a macro cell towards a home cell.

### Detailed Description of the Invention

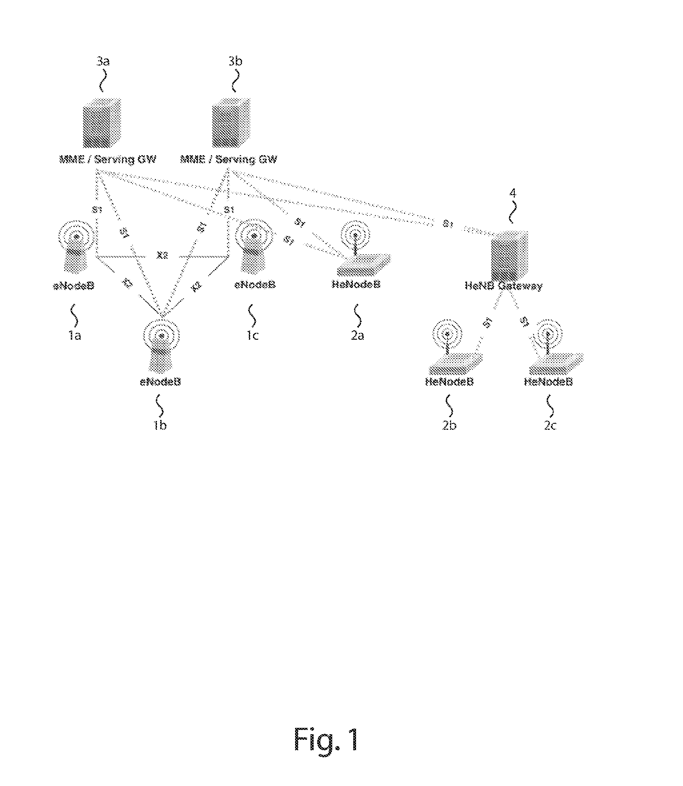

There is seen in fig. 1 an LTE PLMN infrastructure comprising the following network nodes:
- macro eNBs 1 for public coverage,
- HeNBs 2 for indoor coverage,
- combined MME/SG 3, and
- a HeNB gateway 4.

The macro eNBs 1 are connected to each other via X2 interfaces.

The macro eNBs 1 and the HeNB 2a are connected to the MME/SG 3 via S1 interfaces, whereas the HeNBs 2b and 2c are connected to the MME/SG 3 through the HeNB gateway 4 via S1 interfaces.

It is noteworthy that there is no peer to peer X2 connection between macro eNBs 1 and HeNBs 2, as well as between HeNBs 2.

If a handover is to be triggered by a source macro eNB towards a target HeNB, then the correct eNB identifier of the target HeNB shall be passed to the MME in the HANDOVER REQUIRED message (in the so-called Target ID mandatory IE) so as the MME can appropriately route the HANDOVER REQUIRED message towards the right HeNB. The target HeNB is either directly reachable, as the HeNB 2a is for the MME/SG 3, or reachable through a HeNB gateway, as the HeNB 2b and 2c are for the MME/SG 3, or reachable via another MME/SG and possibly another HeNB gateway (not shown).

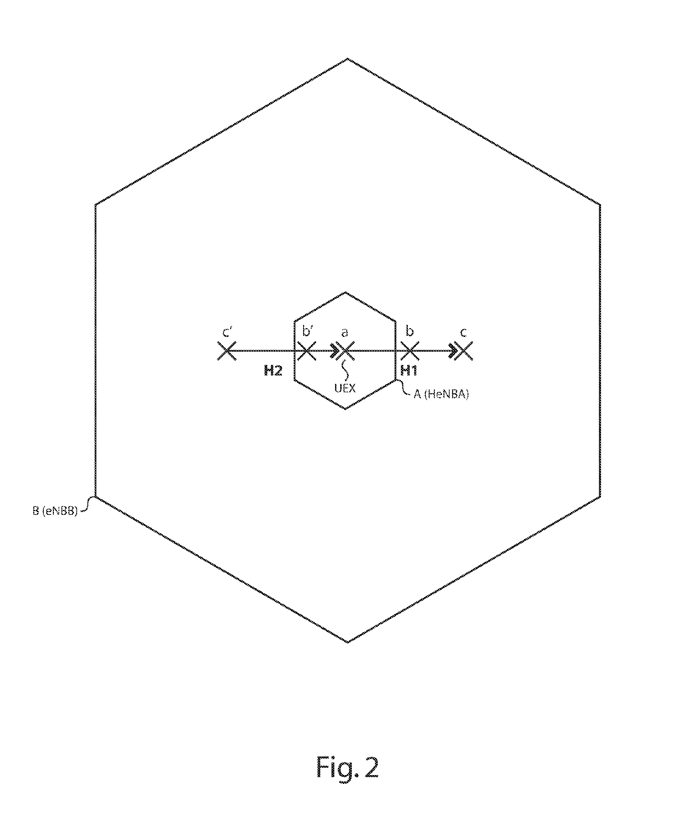

There is seen in fig. 2 a radio coverage area of an LTE mobile network comprising:
- a home cell A, which is operated by a HeNB eNBA, and
- a macro cell B, which is operated by a macro eNB eNBB.

A UE UEX, such as a mobile terminal, establishes a communication session at position a, within the coverage area of the home cell A.

The UE UEX next moves towards position c while the communication session is on-going.

At position b, the radio signal from macro cell B incurs a lower path loss than the radio signal from home cell A. Provided the difference between the respective path losses is beyond some configured handover margin, an outbound handover H1 is triggered for handing over the on-going session towards the macro cell B.

Later on, the UE UEX (or another UE) establishes another communication session at position c', within the coverage area of the macro cell B, and next moves towards position a while the communication session is on-going.

At position b', the radio signal from home cell A incurs a lower path loss than the radio signal from macro cell B. Provided the difference between the respective path losses is beyond some configured handover margin, an inbound handover H2 is triggered for handing over the on-going session towards the home cell A.

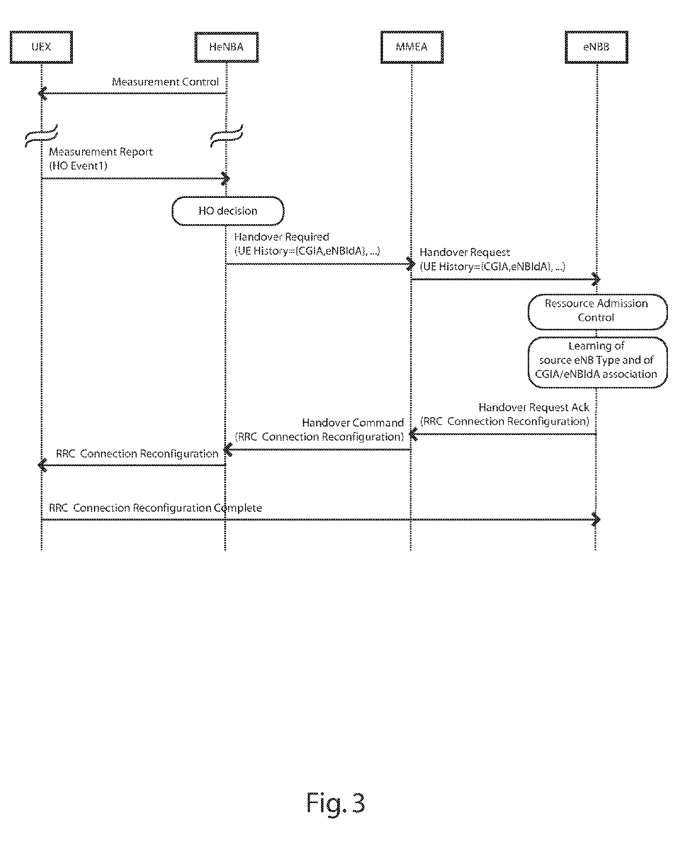

There is seen in fig. 3 a message flow chart representing the most noticeable messages exchanged during the outbound handover H1 between the UE UEX, the source HeNB HeNBA, the target macro eNB eNBB, and a MME MMEA.

First, the UE UEX establishes a communication session within the home cell A.

Next, the UE UEX receives a MEASUREMENT CONTROL message, whereby the UE UEX is configured with specific measurement and handover parameters. The UE UEX measures the signal strength/quality from neighboring cells, and compares them with the respective handover thresholds.

In a further step, as the UE UEX leaves the home cell A operated by the HeNB HeNBA and enters a public area covered by the macro cell B operated by the macro eNB eNBB, a MEASUREMENT REPORT message is sent to the source HeNB HeNBA for notifying a handover event HO EVENT1 towards the target cell B.

Thereupon, the source HeNB HeNBA decides to perform a handover for the UE UEX from the source cell A towards the target cell B. The source HeNB HeNBA sends a HANDOVER REQUIRED message to the MME MMEA. The HANDOVER REQUIRED message comprise inter alia the UE History Information IE.

In a preferred embodiment, the UE History Information IE comprises the following IEs for each previously visited cell:
- the E-CGI of the visited cell,
- its cell type, which typically refers to the coverage size of the cell from 'very-small' up to 'large',
- the time (expressed in seconds) the UE stayed in that cell, and
- the global eNB identifier of the eNB to which that cell belongs.

The E-CGI is a combination of the PLMN identity, which is 24 bits long, and the cell identity, which is 28 bits long. The cell identity further comprises the eNB identifier encoded over 20 or 28 bits, depending on whether the eNB is a macro eNB (20 bits) or a home HeNB (28 bits). In case of macro eNBs, the remaining 8 bits of the cell identity are used for encoding the cell identity in the pertaining eNB.

As a consequence, and without any further information available, the target eNB would be unable to properly decode the eNB identifier from the UE History Information IE, and further would be unable to hand over calls towards home cells.

The global eNB identifier is a combination of the PLMN identity, which is 24 bits long, and of the eNB identifier, which is either 20 or 28 bits long.

By explicitly encoding the global eNB identifier of the previously visited cell in the UE History Information IE, the target eNB can retrieve the right eNB identifier value of the source HeNB, no matter this value is encoded over 20 (macro eNBs) or 28 bits (home eNBs).

Indeed, the eNB ID IE within the Global eNB ID IE is typically encoded as a Type Length Value (TLV) tag. The Type and/or Length fields of this TLV tag act as the claimed format indicator, and help discriminate between eNB identifiers that are 20 bits long and those that are 28 bits long, and further between macro eNBs and HeNBs.

Presently, the UE History Information IE comprises an E-CGI CGIA of the source cell A, and an eNB identifier eNBIdA of the source HeNB HeNBA as part of the Global eNB ID IE.

The HANDOVER REQUIRED message further includes the global eNB identifier of the target eNB so as to allow the MME MMEA to properly forward the HANDOVER REQUIRED message as a HANDOVER REQUEST message to the appropriate target eNB, presently the macro eNB eNBB.

The global eNB identifier of the target eNB eNBB is retrieved by the source HeNB HeNBA from the PCI/E-CGI of the target cell as reported by the UE UEX, e.g. by reading a local repository wherein one-to-one relationships between PCI/E-CGI and eNB identifiers are held. Such a solution is foreseeable for configuring outbound handovers towards one or more surrounding macro cells, but would be too cumbersome for configuring inbound handovers toward numerous home cells.

After resource admission control, the target eNB eNBB sends back a HANDOVER REQUEST ACK message to the MME MMEA, which message being relayed as a HANDOVER COMMAND message to the source HeNB HeNBA, and including a RRC CONNECTION RECONFIGURATION container to be passed transparently by the source HeNB HeNBA to the UE UEX as an RRC message.

Furthermore, the association between the E-CGI and the pertaining eNB identifier of a previously visited cell is decoded from the UE History Information IE of a received HANDOVER REQUEST message, and stored by the target eNB. Presently, the E-CGI CGIA is stored by the macro eNB eNBB as being associated with the eNB identifier eNBIdA.

The UE UEX receives the RRC CONNECTION RECONFIGURATION message with necessary parameters, and is commanded by the source HeNB HeNBA to perform the handover. The UE performs synchronization to the target eNB eNBB and accesses the target cell B via RACH. The target eNB eNBB responds with uplink allocation and timing advance value. When the UE UEX has successfully accessed the target cell B, the UE UEX sends the RRC CONNECTION RECONFIGURATION COMPLETE message to the target eNB eNBB. The target eNB eNBB can now begin sending data to the UE UEX.

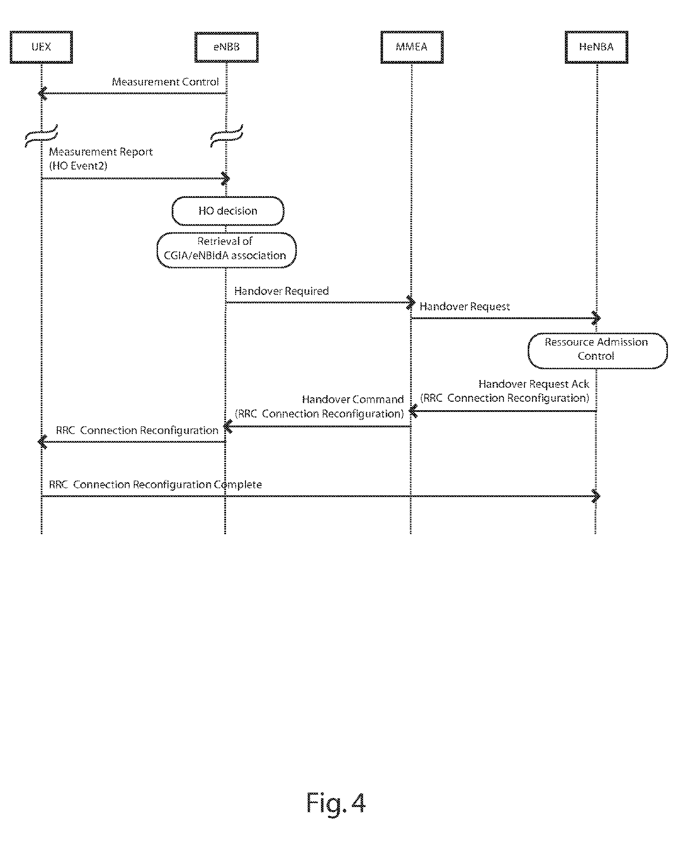

There is seen in fig. 4 a message flow chart representing the most noticeable messages exchanged during the inbound handover H2 between the UE UEX, the source macro eNB eNBB, the target HeNB HeNBA and the MME MMEA.

First, the UE UEX (or another UE) establishes a communication session within the macro cell B (or within another cell, and then is handed over towards cell B).

Next, the UE UEX receives a MEASUREMENT CONTROL message, whereby the UE UEX is configured with specific measurement and handover parameters. The UE UEX measures the signal strength/quality from neighboring cells, and compare them with the respective handover thresholds.

In a further step, as the UE UEX leaves the macro cell B operated by the eNB eNBB and enters the home cell A operated by the HeNB HeNBA, a MEASUREMENT REPORT message is sent to the source eNB eNBB for notifying a handover event HO EVENT2 towards the target cell A.

Thereupon, the source macro eNB eNBB decides to perform a handover for the UE UEX from the source cell B towards the target cell A. The source macro eNB eNBB sends a HANDOVER REQUIRED message to the MME MMEA.

The HANDOVER REQUIRED message includes the global eNB identifier of the target eNB so as to allow the MME MMEA to properly forward the HANDOVER REQUIRED message as a HANDOVER REQUEST message to the appropriate target eNB, presently the home HeNB HeNBA.

The global eNB identifier of the target HeNB HeNBA is built from the eNB identifier eNBIdA as retrieved by the source eNB eNBB from the previously stored association CGIA/eNBIdA during the handover H1, possibly after requesting the UE UEX to read the E-CGI CGIA of the target cell A.

After resource admission control, the target HeNB HeNBA sends back a HANDOVER REQUEST ACK message to the MME MMEA, which message being relayed as a HANDOVER COMMAND message to the source eNB eNBB, and including a RRC CONNECTION RECONFIGURATION container to be passed transparently by the source eNB eNBB to the UE UEX as an RRC message.

The UE UEX receives the RRC CONNECTION RECONFIGURATION message with necessary parameters, and is commanded by the source eNB eNBB to perform the handover. The UE performs synchronization to the target HeNB HeNBA and accesses the target cell A via RACH. The target HeNB HeNBA responds with uplink allocation and timing advance value. When the UE UEX has successfully accessed the target cell A, the UE UEX sends the RRC CONNECTION RECONFIGURATION COMPLETE message to the target HeNB HeNBA.

Hence, inbound handovers from macro cells towards home cells are self-configured by means of previous UE history information reported by source HeNBs upon outbound handovers.

An aging timer can be implemented for aging out the CGIA/eNBIdA association as learned by the macro eNB eNBB from the UE History Information IE.

Alternatively, the eNB ID IE, which comprises the eNB identifier only, may substitute for the Global eNB ID IE in the UE History Information IE.

Still alternatively, another format indicator of the eNB identifier, such as a Boolean flag or some dedicated value for the Cell Type IE, may alternatively be used by the source HeNB HeNBA so as to allow the target eNB eNBB to derive the length of the eNB identifier eNBIdA within the E-CGI CGIA.

Although the above description has made exhaustive references to LTE technology and terminology, a radio access node according to the invention may operate in accordance with further mobile or wireless communication technologies that are deemed to support inbound handovers towards Femto cells. The source and/or target radio access node would then refer to the network node of the Radio Access Network (RAN) infrastructure that operates the source and/or target cell for handover procedures, and that controls inbound/outbound handover decisions to/from that cell. For instance, the source and/or target radio access node may refer to a macro eNB or HeNB for LTE, a Radio Network Controller (RNC) for Universal Mobile Telecommunication System (UMTS), a Base Station Controller (BSC) for Global System for Mobile (GSM), etc.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. Other hardware, conventional and/or custom, such as read only memory (ROM), random access memory (RAM), and non volatile storage, may also be included.

## Claims

1. **A method** for transferring **an ongoing communication session** for **a user equipment** (UEX) from **a source cell** (A) to **a target cell** (B), and comprising the steps of:
- by **a source radio access node** (HeNBA) operating said source cell, sending **a first handover message** (HANDOVER REQUIRED) whereby **an outbound handover** (H1) from said source cell towards said target cell is requested for said user equipment, and comprising **mobility history information** (UE HISTORY) of said user equipment during said communication session, and further comprising **a node identifier** (eNBIdA) of said source radio access node as part of said mobility history information,
- by **a target radio access node** (eNBB) operating said target cell, sending **a second handover message** (HANDOVER REQUEST ACK) whereby request for said outbound handover is acknowledged, *wherein* said method further comprises the steps of:
- by said source radio access node, further encoding **a format indicator** as part of said mobility history information whereby said target radio access node learns whether said node identifier is encoded according to **a first format** applicable to macro radio access nodes or according to **a second format** applicable to home radio access nodes,
- by said target radio access node, decoding accordingly said node identifier from said mobility history information, *thereby* allowing said target radio access node to further initiate **inbound handovers** (H2) from said target cell to said source cell.

2. **A method** according to claim 1, *wherein* said format indicator is encoded as part of said node identifier encoding.

3. **A method** according to claim 1 or 2, *wherein* said format indicator is **a Boolean flag.**

4. **A method** according to claim 3, *wherein* said Boolean flag forms part of said node identifier.

5. **A method** according to claim 1 or 2, *wherein* said format indicator is **a cell coverage type.**

6. **A radio access node** (HeNBA) configured to operate **a source cell** (A) and involved in the transfer of **an ongoing communication session** for **a user equipment** (UEX) from said source cell towards **a target cell** (B), and further configured to send **a first handover message** (HANDOVER REQUIRED) whereby **an outbound handover** (H1) from said source cell towards said target cell is requested for said user equipment, and comprising **mobility history information** (UE HISTORY) of said user equipment during said communication session, and further comprising **a node identifier** (eNBIdA) of said radio access node as part of said mobility history information,
*wherein* said radio access node is further configured to encode **a format indicator** as part of said mobility history information whereby **a target radio access node** (eNBB) operating said target cell learns whether said node identifier is encoded according to **a first format** applicable to macro radio access nodes or according to **a second format** applicable to home radio access nodes,
*thereby* allowing said target radio access node to decode accordingly said node identifier from said mobility history information, and to further initiate **inbound handovers** (H2) from said target cell to said source cell.

7. **A radio access node** (eNBB) configured to operate **a target cell** (B) and involved in the transfer of **an ongoing communication session** for **a user equipment** (UEX) from **a source cell** (A) towards said target cell, and further configured to receive **a first handover message** (HANDOVER REQUEST) whereby **an inbound handover** (H1) from said source cell towards said target cell is requested for said user equipment, and comprising **mobility history information** (UE HISTORY) of said user equipment during said communication session, and further comprising **a node identifier** (eNBIdA) **of a source radio access node** (HeNBA) operating said source cell as part of said mobility history information,
*wherein* said radio access node is further configured:
- to decode **a format indicator** as part of said mobility history information whereby said radio access node learns whether said node identifier is encoded according to **a first format** applicable to macro radio access nodes or according to **a second format** applicable to home radio access nodes,
- to decode accordingly said node identifier from said mobility history information,
*thereby* allowing said radio access node to further initiate **outbound handovers** (H2) from said target cell to said source cell.
